# EUROPEAN PATENT APPLICATION

(11) **EP 0 528 671 A1**
(43) Date of publication of application: **24.02.1993**
(21) Application number: 92307491.8
(22) Date of filing: 14.08.1992
(51) Int. Cl.: B60S 1/38

(54) **Windscreen wiper blade rubber**

(30) Priority: 15.08.1991 GB 9117600
(71) Applicant: TRICO-FOLBERTH LIMITED, Brentford Middlesex TW8 9HP (GB)
(72) Inventor: Hunt, Albert Henry, Greenford, Middlesex (GB)
(74) Representative: Pedder, James Cuthbert

(57) **Abstract**

A windscreen wiper blade blade rubber (1) comprises a moulded length of blade rubber having a wiping lip (3) along one longitudinal edge and at least one pair of longitudinal slots (9) extending longitudinally of the blade blade rubber (1), one on each side thereof, the slot being closed at at least one position (11) along its length and having a narrowing in the slot (9) in a region adjacent to the closed part (11) whereby a recess (23) with a reduced opening (25) at one end is formed, the arrangement being such that a harness claw (41) sliding along the slot (9) can be forced past the reduced opening (25) so as to be retained in the recess (23).

## Description

This invention relates to a windscreen wiper blade rubber. It is to be understood that while the specification refers to the term "rubber", the material of the "rubber" includes not only true rubber but also includes synthetic rubbers and any other material suitable for the purpose.

The majority of windscreen wiper blades today are of a multiple yoke harness. In this type of blade, the harness consists of a main yoke, attached centrally to the wiper arm and having a pair of subsidiary yokes pivotally attached in their central regions to the ends of the main yoke. These subsidiary yokes may carry one or more further yokes. At the end of the chain, the ends of the yokes are provided with claws which are intended to engage in longitudinal slots in a blade rubber.

The actual attachment of the blade rubber to the harness has to carry out two actions. First, it must allow a sliding movement of the blade rubber in respect to the harness so that the blade rubber can follow the curvature of the windscreen as it moves over it. Secondly, the blade must be sufficiently tightly attached to the harness that the rubber cannot accidentally become detached.

To achieve the first aim, it is merely necessary to ensure that the blade rubber is a sliding fit in the harness claws so that it can slide longitudinally therein. However, this immediately raises a problem with regard to the second aim since a readily sliding blade rubber can readily slide out of at least some of the harness claws.

Various proposals have been made for overcoming this problem. One method is to provide shrouds at the end of the outermost yokes so that the end of the blade rubber is surrounded by the shroud and then only limited sliding movement is possible. Another method is to mould a recess into the blade rubber at the position of one of the claws, usually one situated at one end of the blade, and after assembly of the rubber in the claws, the particular claw in question is pushed inwards so that it engages in the recess and holds the rubber rigid with respect to this claw. sufficient sliding movement then remains in respect to the remainder of the claws to allow the windscreen wiper blade to flex over the windscreen curvature.

Unfortunately, while such a method is eminently satisfactory in use, the manufacturing operation is relatively expensive and complicated in that the initially formed blade harness has the rubber inserted in the claws with the fixing claw open. This claw then has to be replaced in a press to carry out the squeezing action on the claw. This additional operation (known as post forming) not only increases the cost of production but also puts an increased stress on the material of the claw which can, in certain circumstances, damage the finish of the claw and thus permit the claw to deteriorate.

The present invention seeks to provide a windscreen wiper blade rubber in which some or all of the above problems are reduced or substantially obviated.

According to the invention, a windscreen wiper blade rubber comprises a moulded length of rubber having a wiping lip along one longitudinal edge and at least one pair of longitudinal slots extending longitudinally of the blade rubber, one on each side thereof, the slot being closed at at least one position along its length and having a narrowing in the slot in a region adjacent to the closed part whereby a recess with a reduced opening at one end is formed, the arrangement being such that a harness claw sliding along the slot can be forced passed the reduced opening so as to be retained in the recess.

Preferably the closed part of the slot is situated at one end thereof forming an end to the slot. The narrowing of the slot may be formed by a projection moulded on one side wall of the slot, preferably on the side of the slot away from the wiping lip.

The projection may be in the form of a ramp extending outwardly in the longitudinal direction of the slot, the ramp ending in an inwardly extending wall which extends backwards so as to form an overhang and forms one end wall of the recess.

It will be understood that the invention relates not only to the blade rubber itself but also to a windscreen wiper blade incorporating such a blade rubber.

The invention will now be described in greater detail, by way of example, with reference to the drawings, in which:-
Figure 1 is a side view of one end of a windscreen wiper blade rubber in accordance with the invention, and
Figure 2 is a view similar to figure 1 but showing a harness claw in position in the recess formed in the blade rubber.

Referring to the drawings, there is shown one embodiment of a windscreen wiper blade rubber 1 in accordance with the invention. It comprises a length of rubber having a wiping lip 3 along one longitudinal edge and, in the present case, a flat surface 5 along the other edge. Only one end of the blade rubber 1 is shown.

Two slots 7 and 9 are provided, moulded into each side of the blade 1. The upper slot 7 in the present case is intended to receive one half of a blade vertebra of the type known generally as a twin rail type. In this type of vertebra, two longitudinal metallic elements are located in the slots 7 on opposite sides of the blade to impart the desired flexibility to the blade but form no part of the invention as such.

The lower slots 9 which extend substantially the length of the blade rubber 1 is closed at its end at 11 which is spaced by a small distance from the end 13 of the rubber 1. The other end of the slot 9, which is not shown, extends to the other end of the blade rubber 1 and is not closed at this end.

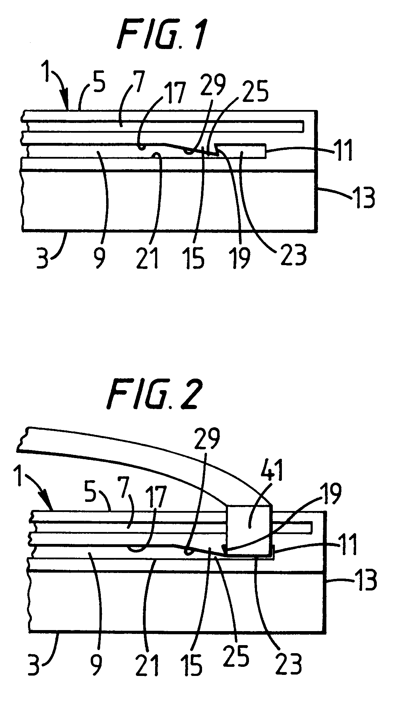

Longitudinally inwards of the end 11 of the slot 9, the width of the slot 9 is reduced by means of a projection 15 which extends inwardly from one side wall 17 of the slot 9. This projection 15 has a side 19 extending backwards towards the wall 17 at an angle which causes an overhang to be formed. This side 19, together with the slot end 11 and the side walls 17 and 21 of the slot 9 forms a recess 23 with a reduced mouth 25, the recess 23 having substantially the same dimensions as or larger dimensions than the end of a harness claw (see figure 2).

The other side of the projection 15 is in the form of a ramp 29 which varies in height from the maximum height of the projection 15 at its end adjacent the recess 23 to nothing at its other end 31 where it merges into the side wall 17 of the slot 9.

The operation of the invention will now be described in relation to the assembly of the blade rubber 1 to a windscreen wiper harness, the end claw of which is shown at 41 in figure 2.

In a usual form of assembly, after the harness has been made, the blade rubber 1 with its vertebra (not shown) in position is threaded onto the claws, such as 41, of the harness by sliding the rubber 1 in turn through the claws starting at the end of the blade rubber 1 with the open end of the slot 9.

As the threading proceeds, the end claw 41 will eventually reach the projection 15. At this point it will slide along the ramp 29 which will cause the side walls 17 and 21 to move apart, due to the resilience of the rubber material, allowing the claw 41 to pass the projection 15. As soon as the claw 41 has passed the projection 15 and entered the recess 23, the walls 17 and 21 of the slot 9 are relieved and these will snap back, presenting the side 19 of the projection 15 to the edge of the claw 41, effectively locking the claw in place and substantially closing the recess 23. Because the side 19 of the projection 15 is angled backwards in relation to the slot 9, an attempt to pull the claw back out of the recess will be unsuccessful where normal operating forces are applied. In particular, the edge of the claw will engage under the overhang and pressure on the side 19 will tend to force the end of the projection 15 outwards to close the slot 9.

It will be appreciated that various modifications may be made to the above described embodiment without departing from the scope of the invention. For example, while it is intended that a recess 23 should be formed in both of the slots 9 on opposite sides of the blade rubber, it is conceivable to provide a recess 23 only on one side.

While in the embodiment shown, the projection 15 extends from the side wall 17 of the slot 9, and this is the preferred position, the projection could extend from the other side wall 21 instead. In still another variation, two projections 15 could be used, each extending from one side wall towards each other. The dimensions of the projection(s) may be such that the narrowing of the slot is complete, i.e. in their non stressed condition, the slot is actually closed.

Although ramp or saw tooth like projections have been described, any suitable form of projection could be used, it being borne in mind that a greater force can be brought to bear on the assembly operation than would be encountered in normal use. Thus the side 19 of the projection 15 could lie at right angles to the side wall 17 instead of being angled back. Both sides of the projection could be right angled or one or both sides could be inclined to some extent. The amount of inclination permissible on the side bordering the recess depending on the necessity of retaining the claw during normal operation.

It is conceivable to provide recesses at both ends of the blade rubber if desired with a view to anchoring the blade rubber at both ends for certain applications. However, this would not normally be desirable or necessary and would create assembly problems, the rubber having to be assembled in both directions, from the middle towards the ends.

Apart from the provision of the wiping lip 3 and the slot 9, the blade rubber may have any desired form. Thus the exact configuration of the blade rubber is not at issue and the type of vertebra used with the blade rubber could be varied as desired.

## Claims

1. A windscreen wiper blade rubber comprising moulded length of rubber (1) having a wiping lip (3) along one longitudinal edge and at least one pair of longitudinal slots (9) extending longitudinally of the blade rubber (1), one on each side thereof, characterised in that each slot (9) is closed at at least one position (11) along its length and having a narrowing in the slot (9) in a region adjacent to the closed part (11) whereby a recess (23) with a reduced opening (25) at one end is formed, the arrangement being such that a harness claw (41) sliding along the slot (9) can be forced past the reduced opening (25) so as to be retained in the recess (23).

2. A windscreen wiper blade rubber as claimed in claim 1, characterised in that the closed part of the slot (9) is situated at one end (13) thereof forming an end to the slot (9).

3. A windscreen wiper blade rubber as claimed in claim 1 or 2, characterised in that the narrowing of the slot (9) is formed by a projection (15) moulded on one side wall (17) of the slot (9).

4. A windscreen wiper blade rubber as claimed in claim 3, characterised in that the projection (15) is moulded on on the side (17) of the slot (9) away from the wiping lip (3).

5. A windscreen wiper blade rubber as claimed in claim 3 or 4, characterised in that the projection (15) is in the form of a ramp (29) extending outwardly in the longitudinal direction of the slot (9), the ramp (29) ending in an inwardly extending wall (19) which extends backwards so as to form an overhang and forms one end wall of the recess (23).

6. A windscreen wiper blade incorporating a windscreen wiper blade rubber as claimed in any one of the preceding claims.
